Europäisches Patentamt

European Patent Office

Office européen des brevets

(19)

(11) Publication number: **0 025 352**
**B1**

(12) **EUROPEAN PATENT SPECIFICATION**

(45) Date of publication of patent specification: **18.05.83**

(51) Int. Cl.³: **C 10 G 35/12**

(21) Application number: **80303136.8**

(22) Date of filing: **05.09.80**

(54) Multiple stage hydrocarbon conversion process.

(30) Priority: **06.09.79 US 73168**
**06.09.79 US 73169**

(43) Date of publication of application:
**18.03.81 Bulletin 81/11**

(45) Publication of the grant of the patent:
**18.05.83 Bulletin 83/20**

(84) Designated Contracting States:
**AT BE CH DE FR GB IT LI NL SE**

(56) References cited:
**US - A - 4 110 197**
**US - A - 4 119 526**

(73) Proprietor: **UOP Inc.**
**10 UOP Plaza Algonquin & Mt. Prospect Roads**
**Des Plaines Illinois 60016 (US)**

(72) Inventor: **Peters, Kenneth David**
**321 Alexander Boulevard**
**Elmhurst Illinois (US)**

(74) Representative: **Hale, Stephen Geoffrey et al,**
**J.Y. & G.W. Johnson Furnival House 14/18 High**
**Holborn**
**London WC1V 6DE (GB)**

Courier Press, Leamington Spa, England.

## Multiple stage hydrocarbon conversion process

This invention relates to a method for effecting the catalytic conversion of a hydrocarbonaceous feedstock in a multiple stage conversion system in which a hydrogen-hydrocarbon reaction mixture is serially processed through a plurality of reaction zones in contact with a particulate catalyst gravitating downwardly through each of said reaction zones. The method is particularly adapted for use with a vapor phase hydrocarbon conversion process and with hydrocarbon conversion reactions which are primarily endothermic reactions, and wherein the reaction mixture is processed downwardly and in essentially radial flow contact with the downwardly moving catalyst particles.

Multiple stage reaction systems such as herein contemplated have found extensive use in the petroleum and petrochemical industries for effecting a variety of hydrocarbon conversion reactions. Said reactions are either exothermic or endothermic and encompass both hydrogen producing and hydrogen consuming reactions. Multiple stage reaction systems usually take one of two forms. Thus, in an endothermic hydrocarbon conversion process, said system may comprise a side-by-side reactor configuration wherein a reactant stream is processed serially from the reaction zone of one reactor through the reaction zone of another reactor with intermediate heating of the reactant stream between reaction zones; or said system may comprise a stacked reactor design wherein a reactant stream is passed serially from a reaction zone of a topmost reactor to a reaction zone of a lowermost reactor, with intermediate heating of the reactant stream. Such systems have been utilized in the petroleum industry to effect numerous hydrocarbon conversion reactions, including catalytic reforming, alkylation and dehydrogenation of ethylbenzene. The method of this invention is particularly useful with respect to an endothermic, vapor phase hydrocarbon conversion process wherein catalyst particles move via gravity flow, and the multiple stage reaction system may comprise side-by-side reactors, stacked reactors, or a combination thereof.

Since catalyst particles which move through a reaction system by gravity flow are necessarily moving in a downward direction, the present method contemplates the withdrawal of catalyst particles from the bottom of one reaction zone and the introduction of said catalyst particles, fresh catalyst particles and/or regenerated catalyst particles to the top portion of a reaction zone next in sequence. The present method is particularly intended to be applied to those reaction systems wherein the downwardly moving catalyst particles are disposed as an annular-form bed in a reaction zone, and the downward flow of the reactant stream is essentially radial flow with respect thereto.

A radial flow reaction system generally consists of tubular form sections of varying nominal cross-sectional areas, said sections being vertically and coaxially disposed to form the reaction vessel. Briefly, the system consists of an outer tubular reaction chamber containing a coaxially disposed tubular catalyst retaining screen with a nominal internal cross-sectional area less than that of said chamber, and a tubular perforated centerpipe having a nominal internal cross-sectional area which is less than that of said catalyst retaining screen. The vapor phase reactant stream is introduced into the outer annular space created by the chamber wall and the catalyst retaining screen, the latter forming an annular-form catalyst holding zone with the perforated centerpipe. The reactant stream flows laterally and radially from said outer annular space through the catalyst retaining zone into said centerpipe and out of the reaction chamber.

Illustrative of a multiple stage stacked reaction zone system, to which the present invention is particularly adaptable, is that shown in U.S. Patent No. 3,706,536. Transfer of the gravity flowing catalyst particles from one reaction zone to another, as well as introduction of fresh catalyst particles and the withdrawal of spent catalyst particles, is effected through utilization of a plurality of catalyst transfer conduits. Experience in the use of such systems, as well as those where the reaction zones are disposed in a side-by-side relationship, indicates that the high vapor flow through the annular-form catalyst holding sections results in catalyst particles being pinned in the vicinity of the perforated centerpipe. Stagnant catalyst areas where the catalyst particles are prevented from assuming the gravity flow pattern are thereby created.

This invention seeks to alleviate the catalyst pinning problem in such a multiple stage hydrocarbon conversion system in which catalyst particles move via gravity flow, especially one comprising a plurality of reaction zones in each of which catalyst particles are disposed in an annular-form bed and move downwardly via gravity flow.

In U.S.—A—4,110,197 a solution for the catalyst pinning problem in such a system is proposed in which an unspecified portion of the hydrogen for reaction with the hydrocarbon feedstock is caused to by-pass the first reaction zone and fractions of it are instead introduced into each of the subsequent reaction zones.

In U.S.—A—4,119,526 an alternative solution for the catalyst pinning problem in such a system is proposed in which the flow of the effluent of at least one reaction zone is restricted.

The present invention seeks to provide a further alternative solution for the catalyst pinning problem which will, if possible, give more satisfactory results.

According to the invention, a method of effecting the catalytic conversion of a hydrocarbonaceous feedstock in a multiple stage conversion system, in which

(1) the feedstock is heated and processed in admixture with hydrogen and at hydrocarbon conversion conditions serially through a plurality of reaction zones containing catalyst particles, a portion of the total hydrogen being admixed with the feedstock prior to introduction into the first reaction zone and the balance of the total hydrogen being introduced after the first reaction zone, the mole ratio of total hydrogen to hydrocarbon being in the range from 0.5:1 to 10:1,

(2) the reaction product effluent from each reaction zone except the last is heated prior to introduction into the next succeeding reaction zone, reaction product being recovered from effluent from the last reaction zones, and

(3) catalyst particles move through each reaction zone via gravity flow, catalyst particles being withdrawn at least periodically from the last reaction zone and fresh or regenerated catalyst particles being introduced at least periodically into the first reaction zone; is characterized in that

(a) the portion of the total hydrogen admixed with the feedstock prior to introduction into the first reaction zone amounts to from 40 to 80 mole percent of the total hydrogen, and

(b) the remaining 20 to 60 mole percent of the total hydrogen is admixed with the reaction product effluent from the penultimate reaction zone prior to its introduction into the last reaction zone.

In a more specific embodiment, this invention provides a method for effecting the catalytic reforming of a naphtha boiling range of hydrocarbonaceous feedstock in a four-stage hydrocarbon conversion system which comprises the steps of:

(a) initially admixing from 60 to 70 mole % of the total hydrogen charged to the four-stage hydrocarbon conversion system with the hydrocarbonaceous feedstock charged thereto, and introducing the heated mixture into the first of four reaction zones each containing catalyst particles moving under gravity flow;

(b) heating the effluents from the first, second and third of the four reaction zones, and introducing the heated material into the second, third and fourth of the four reaction zones respectively, the balance of the total hydrogen being admixed with the third reaction zone effluent;

(c) recovering the effluent from the fourth reaction zone and passing a portion thereof in heat exchange relationship with the hydrogen and hydrocarbonaceous feedstock mixture prior to heating the latter and introducing it into the first reaction zone;

(d) passing another portion of the fourth reaction zone effluent in heat exchange relationship with the balance of the total hydrogen prior to admixture of the latter with the third reaction zone effluent; and

(e) at least periodically withdrawing catalyst particles from the fourth reaction zone, and introducing fresh or regenerated catalyst particles into the first reaction zone.

In a preferred embodiment, the effluent flow of at least one reaction zone may be restricted by means of a fixed restriction orifice to further reduce catalyst pinning. Therefore, in a multiple stage hydrocarbonaceous feedstock conversion system wherein (1) a recycled hydrogen-rich vapor phase is admixed with the feedstock to provide a mixture having a hydrogen:hydrocarbon mole ratio of from 0.5:1 to 10:1, (2) the mixture is heated and processed serially through a plurality of reaction zones, (3) the effluent from each reaction zone except the last is heated prior to introduction into the next succeeding reaction zone, (4) the effluent from the last reaction zone is separated to provide a normally liquid product phase which is recovered and a hydrogen-rich vapour phase at least part of which is recycled, and (5) catalyst particles move through an annular-form bed in each reaction zone via gravity flow, a preferred embodiment of the present invention is a method for effecting the conversion of said feedstock which comprises the steps of: (a) initially introducing from 40 to 80 mole % of the total hydrogen into the first of the plurality of reaction zones by admixing only a sufficient portion of the hydrogen-rich vapor phase with the feedstock, heating, and introducing the heated mixture into said first reaction zone at hydrocarbon conversion conditions; (b) introducing the balance of the total hydrogen into the last reaction zone by admixing the remaining portion of said hydrogen-rich vapor phase that is recycled with the effluent of the penultimate reaction zone, heating, and introducing the heated mixture into the final reaction zone at hydrocarbon conversion conditions; (c) restricting the effluent flow of at least one reaction zone by means of a fixed restriction orifice; (d) at least periodically withdrawing catalyst from the last of said reaction zones; and, (e) at least periodically introducing fresh or regenerated catalyst into the first of said reaction zones.

Preferably, at least a major portion of the last reaction zone effluent is passed in heat exchange relationship with the mixture of hydrocarbonaceous feedstock and a part of the total hydrogen prior to the heating and introduction of said mixture into the first reaction zone in accordance with step (a), and/or at least a minor portion of the last reaction zone effluent is passed in heat exchange relationship with the balance of the total hydrogen prior to admixture of the latter with a reaction zone effluent in accordance with step (b). Suitably, each of the aforesaid flow restrictions, including the recycled hydrogen-rich vapor phase flow restriction if present, effects an increase in the pressure drop across the plurality of reaction zones of from 0.07 to 0.7 kg/cm$^2$ (1 to 10 psi).

The multiple stage reaction system may for example comprise four reaction zones disposed as a vertical stack having a common vertical axis, the catalyst particles being movable from one reaction zone to the next lower reaction zone in the stack via gravity flow.

The method of the present invention is used in hydrocarbon conversion systems which are characterised as multiple stage, and in which catalyst particles move via gravity flow through each reaction zone. Furthermore, the present invention is principally intended to utilization in reactor systems where the principal reactions are endothermic and are effected in the vapor phase. Although the following discussion is specifically directed toward catalytic reforming of naphtha boiling range fractions, there is no intent to so limit the present invention. Catalytic reforming, as well as many other processes, has experienced several phases of development currently terminating in the system in which the catalyst beds assume the form of a descending column in one or more reaction vessels. Typically, the catalysts are utilized in substantially spherical form having a nominal diameter ranging from 0.8 to 4 mm (1/32 to 5/32 inch) in order to offer free-flow characteristics which will neither bridge nor block the descending column or columns of catalyst within the overall system.

In one such multiple stage system, the reaction chambers are vertically stacked, and a plurality, generally from 6 to 16, of relatively small diameter conduits are employed to transfer catalyst particles from one reaction zone to the next lower reaction zone via gravity flow, the catalyst particles being ultimately withdrawn from the last reaction zone. The latter particles are usually transported to the top of a catalyst regeneration facility also functioning with a descending column of catalyst particles. Regenerated catalyst particles are then transported to the top of the upper reaction zone of the stack. In order to facilitate and enhance gravity flow within each reaction vessel, as well as from one zone to another, it is particularly important that the catalyst particles have a relatively small nominal diameter, and one which is preferably less than about 4 mm (5/32 inch). In a conversion system having the individual gravity flow reaction zones in side-by-side relationship, catalyst transport vessels such as those of the type shown in U.S. Patent No. 3,839,197 may be employed in transferring the particles from the bottom of one zone to the top of the succeeding zone, and from the last reaction zone to the top of the regeneration facility.

Catalytic reforming of naphtha boiling range hydrocarbons, a vapor phase operation, is effected at hydrocarbon conversion conditions generally including catalyst bed temperatures in the range of 370° to 550°C (700° to 1020°F). Judicious and cautious techniques generally dictate that catalyst temperatures do not substantially exceed a level of 550°C (1020°F). Other conditions generally include a pressure of from 4.5 to 70 kg/cm$^2$ (50 to 1000 psig), a liquid hourly space velocity (defined as volumes of fresh charge stock per hour, per volume of total catalyst particles) in the range of 0.2 to 10 and a hydrogen to hydrocarbon mole ratio generally in the range of 0.5:1 to 10:1. As those skilled in the petroleum refining arts are aware, the described continuous regenerative reforming system offers numerous advantages when compared to the prior art fixed-bed systems. Among these is the capability of efficient operation at comparatively lower pressures—e.g. 4.5 to 15 kg/cm$^2$ (50 to 200 psig)—and higher liquid hourly space velocities—e.g. 3 to 8. As a result of continuous catalyt regeneration, higher consistent inlet catalyst bed temperatures can be maintained—e.g. 510 to 540°C (950° to 1010°F). Furthermore, there is afforded a corresponding increase in both hydrogen production and hydrogen purity in the recycled vaporous phase from the product separation facility.

Catalytic reforming reactions are varied, and include dehydrogenation of naphthenes to aromatics, dehydrocyclization of paraffins to aromatics, hydrocracking of long chain paraffins into lower boiling, normally liquid materials and, to a certain extent, the isomerization of paraffins. These reactions, the net result of which is endothermicity with respect to the overall reaction system, may be effected through the utilization of one or more Group VIII noble metals (e.g. platinum, iridium, rhodium, palladium) combined with a halogen (e.g. chlorine and/or fluorine) and a porous carrier material such as alumina. Relatively recent investigations have indicated that more advantageous results are attainable and enjoyed through the cojoint use of a catalytic modifier; these have been selected from the group of cobalt, nickel, gallium, germanium, tin, rhenium, vanadium and mixtures thereof. Regardless of the selected catalytic composite, the ability to attain the advantage over the common fixed bed systems is greatly dependent upon achieving acceptable catalyst particle flow downwardly through the system. Not only must this be substantially uniform throughout the cross-section of the annular catalyst bed, but stagnant areas of catalyst must be maintained at the most achievable minimum.

Catalytic reforming is a well known process which has been thoroughly described in the literature, having been a commercially important tool of the petroleum refining industry for about three decades. One of the many things gleaned from the vast amount of catalytic reforming experience and resulting knowledge is the soundness of utilizing multiple stages, each of which contains a different quantity of catalyst, generally expressed as volume percent. The reactant stream, hydrogen and the hydrocarbon feed, flow serially through the reaction zones in order of increasing catalyst volume with, of course, interstage heating. In a three-reaction zone system, typical catalyst loadings are: first, from 10% to 30%; second, from 20% to 40%; and third, from 40% to 60%. With respect to a four-reaction zone system, suitable loadings would be: first, 5% to 15%; second, 15% to 25%; third, 25% to 35%; and fourth, 35% to 50%. Unequal catalyst distribution, increasing in the serial direction of reactant stream flow, facilitates and enhances the distribution of the reactants as well as the overall heating of the reactants.

As hereinbefore stated, the pinning of catalyst particles to the perforated centerpipe stems primarily from the high vapor velocity laterally across the annular-form catalyst holding zone, this adverse effect increasing in degree as the cross-sectional area and length of the catalyst bed decreases. In multiple stage catalytic reforming systems; therefore, the effect is most pronounced in the first and second reaction zones, having the smaller annular cross-sectional areas, somewhat less in the third reaction zone and of a relatively minor consequence in the fourth reaction zone due to its length and larger cross-sectional catalyst area. By the device of diverting a portion of the hydrogen-rich vapor phase normally recycled to the first reaction zone, and recycling said diverted portion to a subsequent reaction zone, the flow rate of the vapor phase reaction mixture across the annular-form catalyst holding zone therein is reduced to the point where the tendency of the catalyst particles to become pinned is substantially obviated. The hydrogen-rich vaporous phase diverted around the first reaction zone is recycled to the last reaction zone to alleviate the coking tendency of said zone wherein catalyst coking is most pronounced. As heretofore mentioned, the hydrogen:hydrocarbon mole ratio of the hydrogen-hydrocarbonaceous feedstock mixture charged to the first reaction zone is in the range of from 0.5:1 to 10:1. Often, a hydrogen:hydrocarbon mole ratio of from 3:1 to 6:1 is preferred—particularly in a multiple stage catalytic reforming system. In any case, from 40 to 80 mole percent of said hydrogen is admixed with the hydrocarbonaceous feedstock charged to the first reaction zone, the balance being charged to the last reaction zone. More preferably, from 60 to 70 mole percent of said hydrogen is admixed with the hydrocarbonaceous feedstock and charged to the first reaction zone.

Catalyst pinning is in large part a function of two dependent variables: (1) the vapor mass flow rate, and (2) the density of the vapors which flow through the annular-form catalyst bed into and through the perforated centerpipe. To reduce or eliminate catalyst pinning, for a given design flow of fresh feedstock, the rate at which the hydrogen-rich vapor phase is recycled to the system must be reduced. This will, however, reduce the total mass flow to a given reaction zone, and this in turn reduces the reactor system pressure drop. Of course, the effective pressure in the initial reactor, in which catalyst pinning is most prevalent and troublesome, is reduced, and a corresponding reduction in vapor density ensues.

In bypassing the initial reaction zone and diverting a portion of the hydrogen-rich recycle gas to a subsequent reaction zone in series therewith as herein contemplated, the pressure drop across the plurality of reaction zones is increased, and the reaction zone or zones preceding said subsequent reaction zone experience a pressure increase and a corresponding increase in vapor density to substantially alleviate the catalyst pinning problem therein.

The catalyst pinning problem can be further alleviated by restricting the effluent flow from the last reaction zone and/or one or more earlier reaction zones. Preferably, the effluent flow from all reaction zones is restricted, either prior to introduction into the next succeeding reaction zone or, with respect to the last reaction zone, prior to separation of the effluent flow into the normally liquid product and hydrogen-rich vapor phase. With respect to the intermediate reaction zones of a four reaction zone system, it is preferred to restrict the effluent flow of said intermediate zones in addition to that of the last reaction zone, with or without restriction of the first reaction zone effluent flow.

Restriction of the various reaction zone effluent streams can be effected in any suitable manner. Desirably, it should produce or result in an additional overall pressure drop across the plurality of reaction zones of from 0.07 to 0.7 kg/cm$^2$ (1 to 10 psi) for each restriction.

The use of the restriction orifices is a contributing factor to an increased pressure in the initial reaction zone, a corresponding increase in the vapor density therein, and a corresponding increase in the pressure drop across the plurality of reaction zones. Use of the restriction orifices also affords a greater recycle gas flow conducive to a reduced deposition of carbonaceous matter on the catalyst particles and a reduced load on the regeneration facility. In this respect, recycling of the diverted hydrogen-rich recycle gas through the last intermediate charge heater to the lowermost reaction zone helps to alleviate the coking tendency of said reaction zone wherein the bulk of the catalyst coking typically occurs.

Preferably, the restriction orifices are placed upstream of the intermediate reaction zone heaters to decrease the heater operating pressure and increase the velocity of the reaction zone effluent in the heater tubes. Similarly, it is a common practice to heat exchange the hydrogen-hydrocarbon reaction mixture against the hot last reaction zone effluent prior to introduction of the mixture into the first reaction zone. In accordance with the preferred mode of effecting the present invention, the hydrogen-rich recycle gas is restricted prior to the heat exchanger. While the restriction of said recycle gas does not necessarily contribute to the solution of the catalyst pinning problem, at least to as great an extent as the reaction zone effluent restriction, it does serve to ensure a proper distribution of the hydrogen-rich recycle gas to the heat exchanger, which generally consists of two parallel shells of exchange. In effect, the restriction orifices reinstate the pressure drop lost while operating at the lower and more desirable hydrogen:hydrocarbon mole ratios and lower reaction zone pressures.

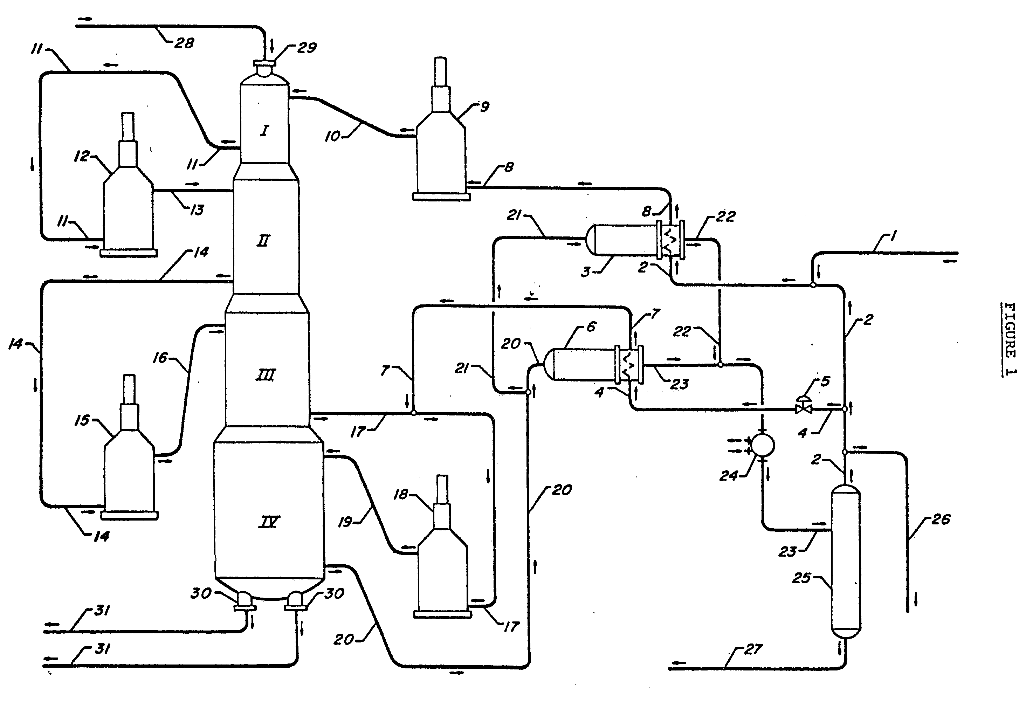

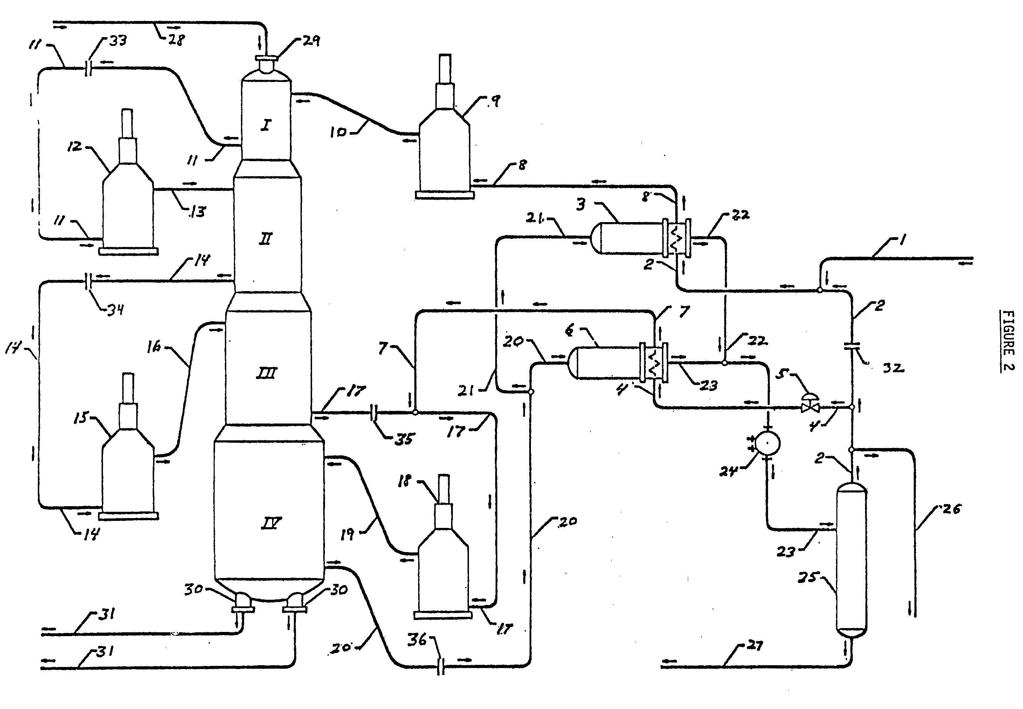

In further description of the present invention, reference is made to the accompanying drawings, which are presented solely for purpose of illustration and are not intended as a limitation on the scope of the invention as set out in the claims. Therefore, miscellaneous appurtenances well within the purview of those skilled in the art and not required for a complete understanding of the invention have been eliminated or reduced in number. Figures 1 and 2 of the drawings are simplified schematic flow diagrams showing alternative embodiments of a 4-reaction zone catalyst reforming system having an uppermost or first reaction zone I, two intermediate reaction zones II and III, and a lowermost or fourth reaction zone IV.

Referring to Figure 1 of the drawings, a stacked, gravity flow, catalytic reaction system is shown as having four individual reaction zones which are sized as to length and annular catalyst cross-sectional areas such that the distribution of the total catalyst volume is 10% in zone I, 15% in zone II, 25% in zone III, and 50% in zone IV. In a normal, substantially problem-free operation, fresh or regenerated catalyst particles are introduced through conduit 28 and inlet port 29 into the uppermost reaction zone I, and said particles gravitate downwardly into reaction zone II, from reaction zone II to reaction zone III, and from reaction zone III to reaction zone IV, said particles being ultimately withdrawn from the reactor system through a plurality of outlet ports 30 and conduits 31. Catalyst particles thus recovered may be transported to a continuous regeneration zone, not shown, or may be stored until a sufficient quantity is available for a batch type regeneration. The rate of catalyst flow through the reactor system, or the period of time required for catalyst particles to be introduced into the system, to traverse the four reaction zones, and to be withdrawn for regeneration, is determined by the rate at which the latter is effected. By monitoring various operating parameters while the system is in continuous operation, the catalyst withdrawal rate, or regeneration load, can be controlled.

In use of the system in a preferred embodiment a naphtha boiling range hydrocarbon feedstock is admitted by way of line 1 and admixed with one portion of a hydrogen-rich vapor phase recovered from a separator 25 through line 2 as hereinafter related. The hydrocarbon feedstock is admixed with said hydrogen-rich vapor phase to provide a reaction mixture having a hydrogen:hydrocarbon mole ratio of about 3:1, and said mixture is continued through line 2 to a heat exchanger 3 wherein the mixture is preheated by indirect heat exchange with the bulk of the hot reaction mixture effluent recovered from the lowermost reaction zone IV through line 20.

A second portion of said hydrogen-rich vapor phase recovered from said separator 25 is diverted from line 2 through line 4 and a flow control valve 5 and passed to a second heat exchanger 6 wherein said diverted hydrogen-rich vapor phase is preheated by indirect heat exchange with another portion of said hot reaction mixture effluent recovered from the lowermost reaction zone IV via line 20. This last-mentioned preheated hydrogen-rich vaporous phase is recovered from the heat exchanger 6 through line 7 and recycled to the lowermost reaction zone IV as hereinafter described.

The hydrogen-hydrocarbon reaction mixture preheated in heat exchanger 3 exits from the heat exchanger by way of line 8 and enters a charge heater 9 wherein the mixture is heated to provide a desired inlet temperature to the catalyst bed disposed in the uppermost reaction zone I. The heated mixture is recovered from said charge heater 9 and charged to said reaction zone through line 10. The hydrogen-hydrocarbon reaction mixture is processed downwardly through said uppermost reaction zone I, and the effluent from said reaction zone is recovered and transferred to a first intermediate charge heater 12 by way of line 11. The effluent stream is thus reheated to provide a desired inlet temperature to the next catalyst bed disposed in the first intermediate reaction zone II, the reheated effluent stream being charged to said reaction zone by way of line 13. The hydrogen-hydrocarbon reaction mixture is continued downwardly through said reaction zone II, and the reaction zone effluent is recovered through line 14, reheated in a second intermediate charge heater 15, and charged to a second intermediate reaction zone III through line 16 to provide a desired inlet temperature to the catalyst bed disposed therein. The reaction zone III effluent stream is withdrawn through line 17 and admixed with the aforementioned preheated hydrogen-rich vaporous phase recycled through line 7 to provide a reaction mixture having a hydrogen:hydrocarbon mole ratio of about 4.5:1. The hydrogen enriched reaction mixture is then continued through line 17 to a third and last intermediate charge heater 18 wherein the mixture is reheated to provide a desired inlet temperature to the catalyst bed disposed in the lowermost reaction zone IV. The reheated mixture is transferred from the last-mentioned heater to said reaction zone IV by way of line 19.

The hot reaction mixture effluent stream from the lowermost reaction zone IV is recovered through line 20 and utilized as a heat exchange medium in the heat exchangers 3 and 6. The hot effluent stream is distributed to heat exchanger 6 through line 20, and to heat exchanger 3 through line 20 and line 21. The reaction mixture effluent thus cooled is recovered from heat exchanger 3 by way of line 22, and from heat exchanger 6 by way of line 23, the heat exchanger effluent streams being combined in line 23 and passed through a condenser 24 wherein further cooling and condensation is effected at a temperature of from 15 to 60°C (60° to 140°F). The mixture is continued through line 23 to a separator 25. A hydrogen-rich vapor phase is withdrawn from the separator 25 through line 2, and excess hydrogen is discharged from the process through line 26 at a rate determined by pressure control means not shown. The balance of the hydrogen-rich vapor phase is continued through line 2 for recycle to the uppermost reaction zone I in admixture with the hydrocarbon feedstock, and for recycle to the lowermost reaction zone IV, all in accordance with the foregoing process description. A normally liquid phase portion of the reaction mixture is withdrawn from the separator 25 through line 27 and treated in conventional fractionation facilities which are not shown.

By diverting a portion of the hydrogen-rich recycle gas to the lowermost reaction zone, a portion which would normally be included in the hydrogen-rich recycle gas charged to the uppermost reaction zone, the flow rate of the vapor phase reaction mixture to and through the initial reaction zones is reduced to the point where the tendency of the catalyst particles to become pinned therein is substantially obviated. Further, by preheating and injecting the diverted hydrogen-rich recycle gas into the last intermediate charge heater, the load on said heater is appreciably reduced, and the improved thermal conductivity of the lowermost reaction zone effluent enhances the heat exchange capacity of the downstream heat exchangers. And still further, recycling of the diverted hydrogen-rich recycle gas through the last intermediate charge heater to the lowermost reaction zone helps to alleviate the coking tendency of said reaction zone wherein the bulk of the catalyst coking typically occurs.

Figure 2 shows the same flow scheme as Figure 1 with the addition of restriction orifices 32, 33, 34, 35 and 36.

In the embodiment shown in Figure 2, a naphtha boiling range hydrocarbon feedstock is admitted to the process by way of line 1 and admixed with a hydrogen-rich vapor phase being recycled through line 2 from a separator 25, said hydrogen-rich vapor phase being recycled through a restriction orifice 32 rated at about 0.42 kg/cm$^2$ (6 psi) and contained in line 2. The hydrocarbon feedstock is admixed with said hydrogen-rich vapor phase to provide a reaction mixture suitably having a hydrogen:hydrocarbon mole ratio of about 3:1, and said mixture is continued through line 2 to a heat exchanger 3 wherein the mixture is preheated by indirect heat exchange with the bulk of the hot reaction mixture effluent recovered from the lowermost reaction zone IV through line 20 and transferred to the heat exchanger 3 via line 21.

A second portion of said hydrogen-rich vapor phase being recycled from said separator 25 is diverted from line 2 at a point upstream of said restriction orifice 32 and transferred through line 4 and a flow control valve 5 to a second heat exchanger 6 wherein the diverted hydrogen-rich vapor phase is preheated in indirect heat exchange with a portion of this hot reaction mixture effluent recovered from the lowermost reaction zone IV via line 20. This last-mentioned preheated hydrogen-rich vapor phase is recovered from the heat exchanger 6 through line 7 and recycled to the lowermost reaction zone IV as hereinafter described.

The hydrogen-hydrocarbon reaction mixture preheated in heat exchanger 3 exits through line 8 and enters a charge heater 9 wherein the mixture is heated to provide a desired inlet temperature to the annular-form catalyst bed disposed in the uppermost reaction zone I. The resulting vapor phase reaction mixture is recovered from the charge heater 9 and charged to said reaction zone I through line 10. The reaction mixture is processed downwardly through said uppermost reaction zone I, and the effluent from said reaction zone is recovered through line 11 containing a restriction orifice 33 rated at about 0.35 kg/cm$^2$ (5 psi). Said effluent is continued through line 11 to a first intermediate charge heater 12. The effluent stream is thus reheated to provide a desired inlet temperature to the next annular-form catalyst bed disposed in the first intermediate reaction zone II, the reheated effluent stream being charged to said reaction zone by way of line 13. The hydrogen-hydrocarbon reaction mixture is continued downwardly through reaction zone II, and the reaction zone effluent is recovered through a restriction orifice 34 in line 14, reheated in a second intermediate charge heater 15, and charged to a second intermediate reaction zone III through line 16 to provide a desired inlet temperature to the annular-form catalyst bed disposed therein. The last-mentioned restriction orifice is rated at about 0.42 kg/cm$^2$ (6 psi).

The reaction zone III effluent stream is withdrawn through line 17 containing a restriction orifice 33 rated at about 0.42 kg/cm² (6 psi) and located upstream of the juncture of line 7 with line 17. At said juncture, the afore-mentioned preheated hydrogen-rich vapor phase recycled through line 7 is admixed with the reaction zone III effluent stream passing through line 17, suitably to provide a reaction mixture therein having a hydrogen:hydrocarbon mole ratio of about 4.5:1. This hydrogen-enriched reaction mixture is continued through line 17 to a third and last intermediate charge heater 18 wherein the mixture is reheated to provide a desired inlet temperature to the annular-form catalyst bed disposed in the lowermost reaction zone IV. The reheated mixture is transferred from the last-mentioned heater to said reaction zone IV by way of line 19.

The hot reaction mixture effluent stream from the lowermost reaction zone IV is recovered through line 20 and a restriction orifice 36 rated at about 0.42 kg/cm² (6 psi). The hot effluent stream is continued through line 20 and utilized as a heat exchange medium in the heat exchangers 3 and 6. A major portion of the hot effluent stream is diverted from line 20 through line 21 to heat exchanger 3, while a minor portion continues through line 20 to heat exchanger 6. The reaction mixture thus cooled is recovered from heat exchanger 3 through line 22, and from heat exchanger 6 through line 23, the heat exchanger effluent streams being combined in line 23 and passed through a condenser 24 wherein further cooling and condensation is effected at a temperature of from 15 to 60°C (60° to 140°F). The mixture is continued through line 23 to a separator 25. A hydrogen-rich vapor phase is withdrawn from the separator 25 through an overhead line 2, and excess hydrogen is recovered through line 26 at a rate determined by a pressure control means not shown. The balance of the hydrogen-rich vapor phase is continued through line 2, with one portion being diverted through line 5 at a point upstream of the restriction orifice 3 for recycle to the lowermost reaction zone IV, and the remainder being continued through line 2 and said restriction orifice 3 for recycle to the uppermost reaction zone I, all in accordance with the foregoing process description. A normally liquid product phase of the reaction mixture is recovered from the separator 25 through line 27 and treated in conventional fractionation facilities which are not shown.

To reiterate briefly, by diverting a portion of the hydrogen-rich recycle gas to the lowermost reaction zone, a portion which would normally be included in the hydrogen-rich recycle gas charged to the uppermost reaction zone, the flow rate of the vapor phase reaction mixture to and through the initial reaction zones is reduced, the initial reaction zones experience a pressure increase and a corresponding increase in vapor pressure, and the pressure drop across the plurality of reaction zones is increased. This desirable combination of effects is the further result of the restriction orifices in the effluent flow of the various reaction zones. The end result is that the tendency of the catalyst particles to become pinned in the initial reaction zones is substantially obviated.

## Claims

1. A method of effecting the catalytic conversion of a hydrocarbonaceous feedstock in a multiple stage conversion system in which

(1) the feedstock is heated and processed in admixture with hydrogen and at hydrocarbon conversion conditions serially through a plurality of reaction zones containing catalyst particles, a portion of the total hydrogen being admixed with the feedstock prior to introduction into the first reaction zone and the balance of the total hydrogen being introduced after the first reaction zone, the mole ratio of total hydrogen to hydrocarbon being in the range from 0.5:1 to 10:1,

(2) the reaction product effluent from each reaction zone except the last is heated prior to introduction into the next succeeding reaction zone, reaction product being recovered from effluent from the last reaction zone, and

(3) catalyst particles move through each reaction zone via gravity flow, catalyst particles being withdrawn at least periodically from the last reaction zone and fresh or regenerated catalyst particles being introduced at least periodically into the first reaction zone; the method being characterised in that

(a) the portion of the total hydrogen admixed with the feedstock prior to introduction into the first reaction zone amounts to from 40 to 80 mole percent of the total hydrogen, and

(b) the remaining 20 to 60 mole percent of the total hydrogen is admixed with the reaction product effluent from the penultimate reaction zone prior to its introduction into the last reaction zone.

2. A method as claimed in claim 1 wherein the plurality of catalytic reaction zones consists of three reaction zones and the balance of the hydrogen is admixed with the second reaction zone effluent.

3. A method as claimed in claim 1 wherein the plurality of catalytic reaction zones consists of four reaction zones and the balance of the hydrogen is admixed with the third reaction zone effluent.

4. A method as claimed in any of claims 1 to 3 wherein from 60 to 70 mole percent of the total hydrogen is admixed with the hydrocarbonaceous feedstock.

5. A method as claimed in any of claims 1 to 4 wherein at least a minor portion of the reaction product effluent from the last reaction zone is passed in heat exchange relationship with the remaining 20 to 60 mole percent of the total hydrogen prior to admixture of the latter with the reaction product effluent from the penultimate reaction zone.

6. A method as claimed in any of claims 1 to 4 wherein the reaction product from the last reaction zone is split into a major portion, which is passed in heat exchange relationship with the mixture of the feedstock and 40 to 80 mole percent of the total hydrogen prior to introduction of said mixture into the first reaction zone, and a minor portion, which is passed in heat exchange relationship with the remaining 20 to 60 mole percent of the total hydrogen prior admixture of said hydrogen with the reaction product effluent from the penultimate reaction zone, and said minor and major portions are subsequently recombined for recovery of reaction product.

7. A method as claimed in any of claims 1 to 6, wherein the effluent flow of at least one reaction zone is restricted by means of a fixed restriction orifice, each of the flow restrictions preferably effecting an increase in the pressure drop across the plurality of reaction zones of from 0.07 to 0.7 kg/cm² (1 to 10 psi).

8. A method as claimed in claim 7 wherein the effluent flow of a reaction zone other than the last is optionally restricted prior to the introduction thereof into the next succeeding reaction zone, and the last reaction zone effluent is restricted prior to the separation thereof into a normally liquid product phase and a hydrogen-rich vapor phase, at least a portion of which is recovered for recycle to provide the hydrogen for admixing with the feedstock and the effluent from the penultimate reaction zone.

9. A method as claimed in claim 7 or 8 wherein said plurality of reaction zones comprises at least three reaction zones, and the effluent flow from at least the last three zones is restricted.

10. A method as claimed in any of claims 1 to 9 wherein the reaction zones are either disposed in side-by-side relationship, with catalyst particles being transferred from the bottom of one reaction zone to the top of the next succeeding reaction zone, or are stacked and share a common vertical axis, with catalyst particles flowing via gravity from one reaction zone to the next lower reaction zone in the stack, and wherein the catalyst particles move through an annular-form bed in each reaction zone via gravity flow, the reactants flowing radially through said annular-form bed.

## Patentansprüche

1. Verfahren zur Durchführung der katalytischen Umsetzung eines Kohlenwasserstoffeinsatzmaterials in einem mehrstufigen Umsetzungssystem, wobei
(1) das Einsatzmaterial erhitzt und mit Wasserstoff vermischt im Durchgang durch eine Mehrzahl aufeinanderfolgender, Katalysatorteilchen enthaltender Reaktionszonen bei Kohlenwasserstoffumsetzungsbedingungen zur Reaktion gebracht wird, wobei ein Teil des Gesamtwasserstoffs dem Einsatzmaterial vor der Einführung in die erste Reaktionszone beigemischt und der Rest des Gesamtwasserstoffs nach der ersten Reaktionszone zugesetzt wird, wobei das Molverhältnis von Gesamtwasserstoff zu Kohlenwasserstoff im Bereich von 0,5:1 bis 10:1 liegt,
(2) das aus jeder Reaktionszone ausser der letzten ablaufende Reaktionsprodukt vor der Einführung in die nächstfolgende Reaktionszone erhitzt wird und das Produkt der Reaktion aus dem Ablauf der letzten Reaktionszone gewonnen wird und
(3) Katalysatorteilchen sich unter Schwerkraftströmung durch jede Reaktionszone bewegen, wobei Katalysatorteilchen mindestens von Zeit zu Zeit aus der letzten Reaktionszone abgezogen und frische oder regenerierte Katalysatorteilchen mindestens von Zeit zu Zeit in die erste Reaktionszone eingebracht werden, dadurch gekennzeichnet, dass
(a) der vor der Einführung in die erste Reaktionszone mit dem Einsatzmaterial vermischte Anteil Gesamtwasserstoff 40 bis 80 Molprozent des Gesamtwasserstoffs beträgt und
(b) die verbleibenden 20 bis 60 Molprozent des Gesamtwasserstoffs mit dem aus der vorletzten Reaktionszone ablaufenden Reaktionsprodukt vor dessen Einführung in die letzte Reaktionszone vermischt werden.

2. Verfahren nach Anspruch 1, worin die Mehrzahl katalytischer Reaktionszonen aus drei Reaktionszonen besteht und die Restmenge Wasserstoff mit dem Ablauf aus der zweiten Reaktionszone vermischt wird.

3. Verfahren nach Anspruch 1, worin die Mehrzahl katalytischer Reaktionszonen aus vier Reaktionszonen besteht und die Restmenge Wasserstoff mit dem Ablauf aus der dritten Reaktionszone vermischt wird.

4. Verfahren nach einem der Ansprüche 1 bis 3, worin 60 bis 70 Molprozent des Gesamtwasserstoffs mit dem Kohlenwasserstoffeinsatzmaterial vermischt werden.

5. Verfahren nach einem der Ansprüche 1 bis 4, worin mindestens ein kleinerer Teil des aus der letzten Reaktionszone ausgetragenen Reaktionsprodukts einem Wärmeaustausch mit den verbleibenden 20 bis 60 Molprozent des Gesamtwasserstoffs vor deren Vermischen mit dem aus der vorletzten Reaktionszone ablaufenden Reaktionsprodukt unterzogen wird.

6. Verfahren nach einem der Ansprüche 1 bis 4, worin das Reaktionsprodukt aus der letzten Reaktionszone in einen grösseren Teil, der einem Wärmeaustausch mit dem Gemisch des Einsatzmaterials und 40 bis 80 Molprozent des Gesamtwasserstoffs vor der Einführung dieses Gemischs in die erste Reaktionszone unterzogen wird, und einen kleineren Teil, der einem Wärmeaustausch mit den verbleibenden 20 bis 60 Molprozent des Gesamtwasserstoffs vor dessen Vermischen mit dem aus der vorletzten Reaktionszone ablaufenden Reaktionsprodukt unterzogen wird, unterteilt wird und diese kleineren und grösseren Teile danach zur Gewinnung des Reaktionsprodukts wiedervereinigt werden.

7. Verfahren nach einem der Ansprüche 1 bis 6, worin die Ablaufströmung aus mindestens einer Reaktionszone mittels einer feststehenden Blende gedrosselt wird, wobei die Blenden vorzugsweise jeweils eine Zunahme des Druckabfalls über die Mehrzahl Reaktionszonen um 0,07 bis 0,7 kg/cm² bewirken.

8. Verfahren nach Anspruch 7, worin die Ablaufströmung aus einer anderen Reaktionszone als der letzten gegebenenfalls vor deren Einführung in die nächstfolgende Reaktionszone gedrosselt wird und der Ablauf aus der letzten Reaktionszone gedrosselt wird, bevor er in eine normalerweise flüssige Produktphase und eine wasserstofffreiche Dampfphase getrennt wird, von welcher mindestens ein Teil zur Rückführung gewonnen wird, um den Wasserstoff zum Vermischen mit dem Einsatzmaterial und dem Ablauf aus der vorletzten Reaktionszone zu liefern.

9. Verfahren nach Anspruch 7 oder 8, worin diese Mehrzahl Reaktionszonen aus mindestens drei Reaktionszonen besteht und die Ablaufströmung aus mindestens den letzten drei Zonen gedrosselt wird.

10. Verfahren nach einem der Ansprüche 1 bis 9, worin die Reaktionszonen entweder nebeneinander, mit Ueberführung der Katalysatorteilchen vom Boden einer Reaktionszone zum Kopf der nächstfolgenden Reaktionszone, oder übereinander angeordnet sind und eine gemeinsame vertikale Achse besitzen, wobei die Katalysatorteilchen unter Schwerkraft von einer Reaktionszone in die nächstniedrigere Reaktionszone in dem Aufbau fliessen, und worin sich die Katalysatorteilchen unter Schwerkraftströmung durch ein ringförmiges Bett in jeder Reaktionszone bewegen und die Reaktionsteilnehmer radial durch dieses ringförmige Bett strömen.

**Revendications**

1. Procédé pour effectuer la conversion catalytique d'une alimentation hydrocarbonée dans un système de réaction à plusieurs étages, dans lequel:

(1) l'alimentation est chauffée et traitée en mélange avec de l'hydrogène et dans des conditions de conversion des hydrocarbures successivement dans plusieurs zones de réaction contenant des particules catalytiques, une partie de l'ensemble de l'hydrogène étant mélangée avec l'alimentation avant l'introduction dans la première zone de réaction et le reste de l'ensemble de l'hydrogène étant introduit à l'aval de la première zone de réaction, le rapport molaire de l'ensemble de l'hydrogène aux hydrocarbures se situant dans l'intervalle de 0,5:1 à 10:1,

(2) le produit de réaction effluent de chacune des zones de réaction, à l'exception de la dernière, est chauffé avant son introduction dans la zone de réaction suivante, le produit de réaction étant isolé de l'effluent de la dernière des zones de réaction et

(3) des particules catalytiques circulent dans chacune des zones de réaction en écoulement par gravité, des particules catalytiques étant évacuées au moins périodiquement de la dernière zone de réaction et des particules catalytiques fraîches ou régénérées étant introduites au moins périodiquement dans la première zone de réaction, caractérisé en ce que

(a) la partie de l'ensemble de l'hydrogène mélangée avec l'alimentation avant l'introduction dans la première zone de réaction s'élève de 40 à 80 moles pour cent de l'ensemble de l'hydrogène, et

(b) le restant de 20 à 60 moles pour cent de l'ensemble de l'hydrogène est mélangé avec le produit de réaction effluent de l'avant-dernière zone de réaction avant son introduction dans la dernière zone de réaction.

2. Procédé suivant la revendication 1, dans lequel les plusieurs zones de réaction catalytiques consistent en trois zones de réaction et le reste de l'hydrogène est mélangé avec l'effluent de la deuxième zone de réaction.

3. Procédé suivant la revendication 1, dans lequel les plusieurs zones de réaction consistent en quatre zones de réaction et le reste de l'hydrogène est mélangé avec l'effluent de la troisième zone de réaction.

4. Procédé suivant l'une quelconque des revendications 1 à 3, dans lequel une quantité de 60 à 70 moles pour cent de l'ensemble de l'hydrogène est mélangée avec l'alimentation hydrocarbonée.

5. Procédé suivant l'une quelconque des revendications 1 à 4, dans lequel au moins une partie mineure du produit de réaction effluent de la dernière zone de réaction est passée en relation d'échange de chaleur avec le restant de 20 à 60 moles pour cent de l'ensemble de l'hydrogène avant le mélange de ce restant avec le produit de réaction effluent de l'avant-dernière zone de réaction.

6. Procédé suivant l'une quelconque des revendications 1 à 4, dans lequel le produit de réaction de la dernière zone de réaction est divisé en une partie majeure, qui est passée en relation d'échange de chaleur avec le mélange de l'alimentation et de 40 à 80 moles % de l'ensemble de l'hydrogène avant l'introduction de ce mélange dans la première zone de réaction, et en une partie mineure, qui est passée en relation d'échange de chaleur avec le restant de 20 à 60 moles pour cent de l'ensemble de l'hydrogène avant le mélange de cet hydrogène avec le produit de réaction effluent de l'avant-dernière zone de réaction, et la partie mineure et la majeure sont ensuite recombinées pour l'isolement du produit de réaction.

7. Procédé suivant l'une quelconque des revendications 1 à 6, dans lequel le courant effluent d'au moins une zone de réaction est soumis à restriction au moyen d'un orifice de restriction fixé, chacune des restrictions d'écoulement induisant de préférence une augmentation de la perte de charge dans les plusieurs zones de réaction de 0,07 à 0,7 kg/cm² (1 à 10 livres/pouce carré).

8. Procédé suivant la revendication 7, dans lequel le courant effluent d'une zone de réaction autre que la dernière est éventuellement soumis à restriction avant son introduction dans la zone de réaction suivante et l'effluent de la dernière zone de réaction est soumis à restriction avant d'être séparé en une phase de produit normalement liquide et une phase vapeur riche en hydrogène, dont au moins une partie est recueillie pour le recyclage afin d'apporter l'hydrogène pour le mélange avec l'alimentation et l'effluent de l'avant-dernière zone de réaction.

9. Procédé suivant la revendication 7 ou 8, dans lequel les plusieurs zones de réaction comprennent au moins trois zones de réaction et le courant effluent d'au moins les trois dernières zones est soumis à restriction.

10. Procédé suivant l'une quelconque des revendications 1 à 9, dans lequel les zones de réaction sont disposées soit côte à côte, les particules catalytiques étant transférées du bas d'une zone de réaction au sommet de la zone de réaction suivant, soit en superposition en une tour et ont un axe vertical commun, les particules catalytiques descendant par gravité d'une zone de réaction dans la zone de réaction inférieure suivante de la tour, et dans lequel les particules catalytiques circulent à travers un lit annulaire dans chaque zone de réaction en écoulement par gravité, les réactifs s'écoulant radialement à travers le lit annulaire.